# FASCICULE DE BREVET EUROPEEN

(11) **EP 0 762 030 B1**
(45) Date de publication et mention de la délivrance du brevet: **31.03.1999**
(21) Numéro de dépôt: 96401793.3
(22) Date de dépôt: 14.08.1996
(51) Int. Cl.: F16L 1/032, F16L 55/165

(54) **Appareil de poussée d'une conduite en matière plastique pour tuber intérieurement une canalisation métallique à rénover**
Gerät zum Vortreiben einer Plastikrohrleitung zum Innenauskleiden einer renovierungsbedürftigen Kanalisation aus Metall
Device for thrusting a plastic pipe for the interior lining of metal piping to be renovated

(30) Priorité: 08.09.1995 FR 9510556
(43) Date de publication de la demande: 12.03.1997
(73) Titulaire: GAZ DE FRANCE, 75017 Paris (FR)
(72) Inventeur: Marcout, Alain, 69630 Chaponost (FR); Teillaud Marcel, 69250 Neuville-Sur-Saone (FR); Berger, Yves, 69350 La Mulatière (FR)
(74) Mandataire: Durand, Yves Armand Louis

(56) Documents cités:
- DE-A- 3 238 054
- FR-A- 2 556 812
- GB-A- 2 261 687
- US-A- 3 713 301
- SOVIET PATENT ABSTRACTS Section PQ, Week 9403 9 Mars 1994 Derwent Publications Ltd., London, GB; Class Q, AN 94-024242 XP002015959 & SU-A-1 784 794 (BASHKIR MAIN GAS PIPELINES CONTROL) , 30 Décembre 1992

## Description

La présente invention concerne un appareil de poussée d'une conduite en matière plastique, telle que par exemple polyéthylène, pour tuber intérieurement une canalisation métallique à rénover, par exemple en fonte et transportant un fluide, tel que eau ou gaz par exemple.

Dans les réseaux de canalisations métalliques enfouies, par exemple enterrées dans un sol ou immergées, l'étanchéité de ces canalisations peut être défectueuse au niveau de certains tronçons en raison d'une corrosion locale excessive ou d'une rupture de la canalisation, ce qui nécessite sa rénovation.

Un procédé bien connu consiste à tuber intérieurement la canalisation métallique existante in situ avec une conduite en plastique, ce qui évite de déterrer entièrement les canalisations à rénover.

La figure 5 des dessins annexés montre une canalisation 1 enterrée dans un sol S et dont un tronçon 1a a été tubé intérieurement avec une conduite plastique 2, après avoir creusé deux fouilles F1 et F2 respectivement en amont et en aval du tronçon 1a, 1a flèche G indiquant le sens d'introduction du tube.

Les fouilles F1 et F2 découvrent des portions de canalisation qui sont coupées pour l'introduction de la conduite plastique 2, après avoir obturé de manière étanche les extrémités ouvertes de la canalisation, par exemple avec des ballons gonflables 3 bien connus.

Cette opération de tubage peut également s'effectuer en charge, c'est-à-dire sans interrompre la circulation du fluide, en installant des dérivations 4 entre les différents tronçons de canalisation sectionnés.

On a indiqué schématiquement en 5 des brides d'étanchéité montées sur les extrémités du tronçon de canalisation 1a à tuber pour le guidage axial de la conduite de tubage 2.

On connaît déjà une machine pour pousser ou tirer une conduite de tubage à l'intérieur d'une canalisation à rénover, cette machine pouvant être utilisée hors fouille, c'est-à-dire au niveau de la surface du sol, ou en fouille, c'est-à-dire à l'intérieur du fossé F1 ou F2.

Il est préférable de placer cette machine dite "pousse-tube" le plus près possible de la canalisation sectionnée, c'est-à-dire dans la fouille F1, et dans le même alignement, pour réduire la longueur non maintenue de la conduite en polyéthylène souple et améliorer son guidage.

En effet, si le pousse-tube est fixé hors fouille, une longueur importante de la conduite sera suspendue entre la machine et la canalisation, ce qui présente de nombreux inconvénients en raison de la relative souplesse de la conduite à poser.

Une machine actuellement connue comporte des mâchoires de serrage montées alternativement coulissantes sur un châssis sous l'action d'un vérin de commande, les mâchoires pinçant la conduite lorsqu'elles sont déplacées dans un sens pour entraîner longitudinalement la conduite dans la canalisation à tuber, et libérant cette conduite lorsqu'elles sont rappelées en sens opposé.

Cette machine présente toutefois de nombreux inconvénients, par exemple des problèmes de retour élastique de la conduite lorsqu'elle est libérée par les mâchoires rappelées en position, des risques de blesser la conduite par serrages répétés des mâchoires ou glissement de celles-ci sur la conduite lorsqu'elle rencontre un obstacle à l'intérieur de la canalisation, ou bien encore des problèmes liés à l'avancement discontinu de la conduite.

En effet, les conduites de tubage étant généralement stockées sur des tourets ou dévidoirs, les conduites gardent généralement une courbure résiduelle lors de leur introduction dans la canalisation à tuber, ce qui peut provoquer l'engagement de l'extrémité avant de la conduite dans un creux ou un embranchement de la canalisation lors de chaque interruption de l'avancement de la conduite par la machine lors du rappel des mâchoires et bloquer ainsi la conduite dans la canalisation.

La présente invention a donc pour but d'éliminer les inconvénients précités et de proposer un appareil de poussée d'une conduite en matière plastique pour tuber intérieurement une canalisation métallique, qui présente un encombrement suffisamment réduit pour pouvoir être utilisé en fouille, qui soit de structure et d'utilisation plus simple et qui soit adapté à différentes tailles de conduites.

A cet effet, l'invention a pour objet un appareil de poussée d'une conduite en matière plastique, tel que par exemple polyéthylène, pour tuber intérieurement une canalisation métallique à rénover, par exemple en fonte et transportant un fluide tel que eau ou gaz par exemple, caractérisé en ce qu'il comprend un bâti supportant au moins un train de roulement motorisé et dont la surface d'entraînement est en caoutchouc pour entraîner par friction la conduite plastique et lui conférer un mouvement, d'avance ou de recul, continu à l'intérieur de la canalisation métallique, le train de roulement tournant autour d'une direction sensiblement perpendiculaire au déplacement de la conduite plastique.

Le train de roulement précité peut comprendre plusieurs et par exemple trois roues à bandages pneumatiques.

Au sens de l'invention, le train de roulement motorisé peut être équipé d'un groupe moteur par exemple pneumatique ou bien entraîné manuellement.

Selon une autre caractéristique de l'invention, l'appareil comprend un second train de roulement, motorisé ou non, et constitué d'une pluralité de galets, par exemple en forme de diabolo, de sorte que les deux trains précités enserrent longitudinalement la conduite respectivement de part et d'autre de celle-ci.

Bien entendu, ce second train de roulement pourra être remplacé par une surface plane de glissement.

On peut prévoir que les galets soient en matériau métallique et montés fous sur le bâti.

Selon encore une autre caractéristique de l'invention, le bâti est constitué de deux sous-châssis supérieur et inférieur, séparables et supportant chacun l'un des deux trains précités, les deux sous-châssis s'emboîtant télescopiquement l'un dans l'autre pour régler leur espacement mutuel en fonction du diamètre de la conduite de tubage à poser.

On remarquera que l'appareil de l'invention est avantageusement portatif en raison de son faible poids et encombrement et de sa structure simple.

L'invention sera mieux comprise et d'autres buts, caractéristiques, détails et avantages de celle-ci apparaîtront plus clairement au cours de la description explicative qui va suivre d'un mode de réalisation actuellement préféré de l'invention, donné uniquement à titre illustratif et non limitatif, en référence aux dessins schématiques annexés, dans lesquels :

La figure 1 est une vue en perspective de l'appareil de l'invention entraînant une conduite de tubage, le groupe moteur étant omis.

La figure 2 est une vue en élévation longitudinale du sous-châssis inférieur de l'appareil de la figure 1.

La figure 3 est une vue de dessus de la figure 2.

La figure 4 est une vue en élévation suivant la flèche IV du sous-châssis de la figure 2.

La figure 5 est une vue schématique et en coupe illustrant le tubage d'un tronçon de canalisation.

La figure 6 est une vue de dessus du sous-châssis supérieur de l'appareil de l'invention.

La figure 7 est une vue en élévation longitudinale du sous-châssis de la figure 6.

La figure 8 est une vue analogue à la figure 7, mais montrant le côté opposé du sous-châssis supérieur.

Suivant l'exemple de réalisation représenté sur les dessins, l'appareil de l'invention comprend un sous-châssis supérieur 6 emboîté verticalement et télescopiquement dans un sous-châssis 7.

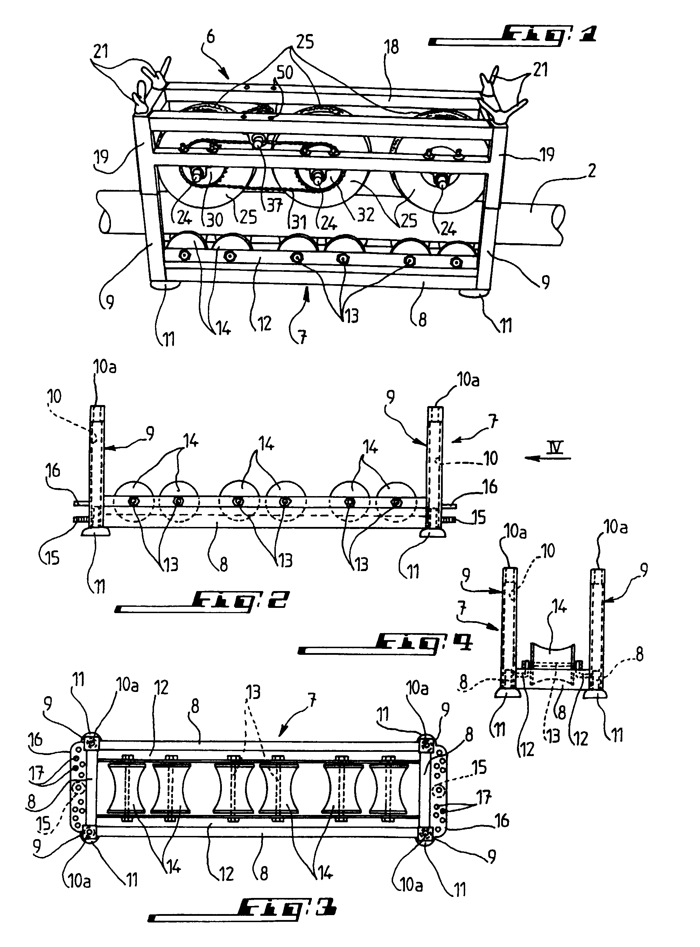

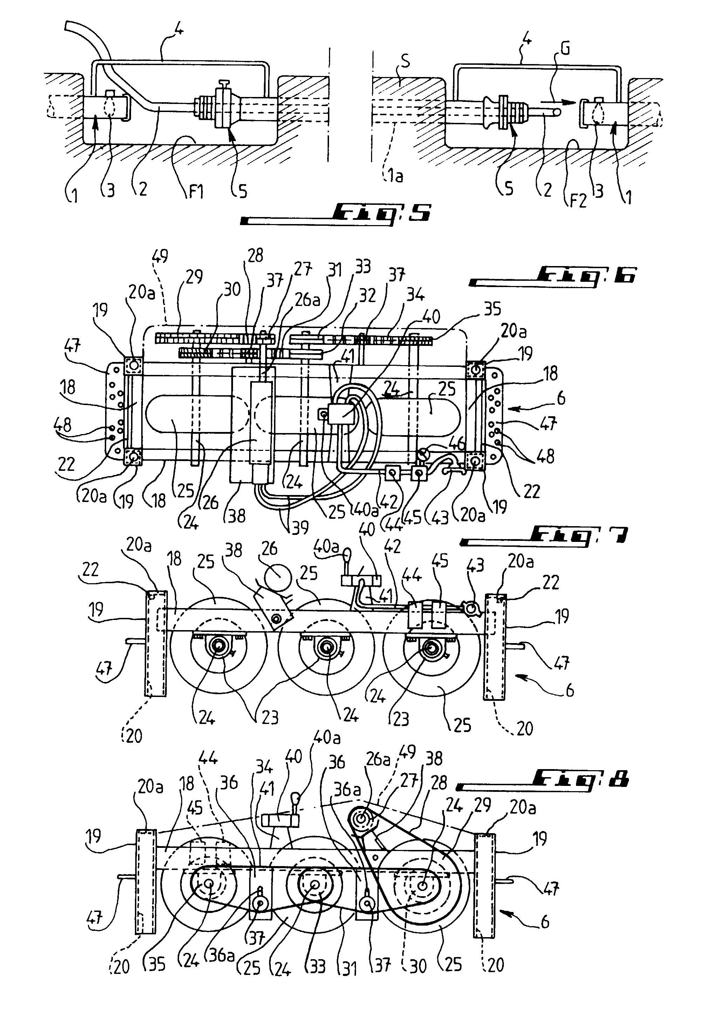

Le sous-châssis 7, qui est mieux visible sur les figures 2 à 4, est formé d'un cadre profilé rectangulaire 8 solidaire à ses quatre coins de montants profilés verticaux 9 à section carrée et traversés verticalement par des logements 10.

Des embases 11 réglables en hauteur pour compenser les inégalités du terrain, dépassent sous le plan du cadre 8 pour servir de pied, au droit des montants 9 précités.

Deux cornières allongées 12 sont fixées longitudinalement aux profilés les plus longs du cadre 8 et supportent entre elles des tiges transversales 13 sur lesquelles sont montés fous des galets 14 à profil concave de révolution, par exemple à la manière d'un diabolo.

Deux anneaux 15 font longitudinalement saillie de chaque extrémité du cadre 8 pour l'ancrage du sous-châssis 7 dans le sol, au moyen de piquets par exemple (non représentés).

Des sangles (non représentées) peuvent également être fixées sur les anneaux 15 pour ceinturer au moins partiellement la conduite 2, ce qui améliore son guidage dans l'appareil et réduit la charge sur les vis de tension 21 lorsque l'appareil est utilisé dans un état suspendu à la conduite.

Deux plaques transversales 16 sont fixées respectivement à chaque extrémité du sous-châssis 7, sensiblement dans le plan des tiges 13, et sont perçées d'une pluralité de trous 17 destinés à recevoir des fiches de centrage (non représentées).

On va maintenant décrire le sous-châssis supérieur 6 en se reportant tout particulièrement aux figures 6 à 8.

Comme pour le châssis inférieur 7, le sous-châssis supérieur 6 comporte un cadre profilé rectangulaire 18 solidaire à ses quatre coins de quatre montants profilés verticaux 19 à section carrée et creux définissant des logements traversants verticaux 20.

Chaque logement 20 présente à partir de sa base jusqu'au voisinage de son sommet une forme interne qui correspond à la forme externe des montants verticaux 9 du sous-châssis inférieur 7, de sorte que les montants inférieurs 9 puissent s'emboîter avec un certain jeu à l'intérieur des montants supérieurs 19.

On voit mieux sur les figures 2 et 7 que les logements 10 et 20 respectivement des montants inférieurs 9 et supérieurs 19 présentent au voisinage de leur sommet des taraudages 10a et des trous de section correspondante 20a respectivement, pour permettre le serrage des deux sous-châssis 6 et 7 ensemble à l'aide de vis de tension 21, représentées sur la figure 1.

Bien entendu, la section des trous 20a et des taraudages 10a est inférieure à celle des logements verticaux 10 et 20.

Deux barres de préhension 22 sont prévues sur le sous-châssis supérieur 6 respectivement entre deux montants verticaux 19, à chacune des extrémités longitudinales de celui-ci pour permettre le transport du sous-châssis supérieur 6 ou de l'appareil en entier, ce qui le rend bien portatif.

Trois paliers à roulement 23 sont fixés sous chaque longeron latéral du cadre 18 pour supporter d'une manière rotative trois axes 24 sur lesquels sont montés des roues à bandages pneumatiques 25.

Les roues à bandages pneumatiques 25 sont entraînées par un moteur par exemple pneumatique 26, par l'intermédiaire d'un train d'engrenages mieux représenté sur les figures 6 et 8.

Le moteur pneumatique 26 comporte un axe de turbine 26a solidaire d'une roue dentée 27 entrainant par l'intermédiaire d'une chaîne 28 une grande roue menée 29 qui est montée sur un axe 24 d'une première roue à bandage pneumatique 25 et solidaire en rotation d'un pignon ou petite roue dentée menante 30 coaxiale à la grande roue 29.

Le pignon 30 engrène avec une autre chaîne sans fin 31 pour entrainer en rotation un second pignon 32 monté sur l'axe 24 d'une autre roue à bandage pneumatique 25 et solidaire en rotation d'un autre pignon menant 33 coaxial au pignon mené 32.

Le pignon menant 33 engrène avec encore une autre chaîne 34 pour entraîner en rotation un quatrième pignon mené 35 qui est monté solidaire en rotation sur l'axe 24 de la troisième roue à bandage pneumatique 25.

On remarquera que les quatre pignons 30, 32, 33 et 35 ont un même diamètre.

Deux pattes 36 (voir figure 8) sont fixées sous l'un des longerons du cadre 18, celui qui est du côté du train d'engrenages, et au niveau de la médiatrice des entraxes des bandages pneumatiques, pour supporter de manière rotative de petits pignons tendeurs 37 qui engrènent intérieurement avec les chaînes 31 et 34 respectivement.

Les axes de ces pignons tendeurs 37 sont montés dans des lumières de réglage 36a à travers les pattes de support 36 précitées.

On peut prévoir par exemple que tous les pignons et les roues soient à double denture et que les chaînes soient à double rouleau.

Bien entendu, on pourrait remplacer le train d'engrenages 27 à 37 précité par tout autre moyen d'entraînement adapté.

On va maintenant décrire le circuit pneumatique de commande du groupe moteur de l'appareil de l'invention.

Le moteur pneumatique 26 précité peut être monté sur un plateau de support 38 fixé transversalement sur les longerons du cadre 18.

Le moteur pneumatique 26 est relié par des câbles de circulation de fluide 39 (voir figure 6) à un boîtier de commande de répartition pneumatique 40, comportant un levier de marche avant/arrière 40a, et supporté sur le sous-châssis supérieur 6 par une pièce transversale 41.

Le boîtier de commande 40 comporte en outre une ligne de débit de fuite (non représentée) pour déverser le fluide sur les chaînes en vue de leur lubrification, et une ligne 42 d'alimentation en fluide à partir d'une bouche d'air comprimé 43.

Sur la ligne d'alimentation 42 sont prévus un huileur 44 et un filtre 45 associé à un manomètre 46.

Le sous-châssis supérieur 6 comporte également deux plaques transversales 47 qui font saillie extérieurement du sous-châssis supérieur 6 aux deux extrémités longitudinales de celui-ci et qui sont percées de trous 48 pour le passage des fiches de centrage précitées.

En position assemblée de l'appareil, la conduite de tubage 2 est longitudinalement logée entre les plaques supérieure 47 et inférieure 16, de sorte qu'en insérant convenablement les fiches à travers les trous 17 et 48 précités, on peut positionner transversalement la conduite pour qu'elle repose au centre des galets 14 et soit à l'aplomb des bandages pneumatiques 25.

Le rayon de la surface concave des galets 14 est égal par exemple à 130 mm et adapté pour recevoir des tubes dont le diamètre est compris entre environ 32 et 200 mm, par exemple.

On a indiqué schématiquement en 49 par une ligne en traits interrompus sur les figures 6 et 8, un carter de protection du groupe moteur et du train d'engrenages associé.

On voit également sur la figure 1 en 50 les points d'ancrage pour le plateau de support 38 du moteur 26.

Le fonctionnement de l'appareil de l'invention résulte clairement de la description détaillée qui en a été faite précédemment.

Bien que l'invention ait été décrite en liaison avec un mode de réalisation particulier, il est bien évident qu'elle n'y est pas limitée et qu'elle comprend tous les équivalents techniques des moyens décrits et leurs combinaisons si celles-ci entrent dans le cadre des revendications qui suivent.

## Revendications

1. Appareil pour tuber en continu l'intérieur d'une canalisation par exemple métallique (1) avec une conduite en matière plastique (2) et comportant un moyen d'entraînement de la conduite, caractérisé en ce qu'il est constitué d'un bâti portatif (6, 7) qui supporte le moyen d'entraînement précité, ce dernier étant un moyen de poussée constitué d'un train de roulement (25) motorisé et dont la surface d'entraînement est en caoutchouc pour entraîner par friction la conduite plastique (2) et lui conférer un mouvement continu à l'intérieur de la canalisation (1), le train de roulement tournant autour d'une direction sensiblement perpendiculaire au déplacement de la conduite plastique.

2. Appareil selon la revendication 1, caractérisé en ce que le train de roulement comprend plusieurs et par exemple trois roues à bandage pneumatique (25).

3. Appareil selon la revendication 1 ou 2, caractérisé en ce que l'appareil comprend un second train de roulement constitué d'une pluralité de galets (14), par exemple en forme de diabolo, de sorte que les deux trains précités enserrent longitudinalement la conduite (2) respectivement de part et d'autre de celle-ci.

4. Appareil selon la revendication 3, caractérisé en ce que les galets (14) sont métalliques et montés fous sur le bâti.

5. Appareil selon la revendication 3 ou 4, caractérisé en ce que le bâti est constitué de deux sous-châssis supérieur (6) et inférieur (7), séparables et supportant chacun l'un des deux trains précités (25, 14).

6. Appareil selon la revendication 5, caractérisé en ce que les deux sous-châssis (6, 7) s'emboîtent télescopiquement l'un dans l'autre pour régler leur espacement mutuel en fonction du diamètre de la conduite de tubage à poser.

## Patentansprüche

1. Gerät um das Innere einer Rohrleitung z.B. aus Metall (1) mit einem Kunststoffrohr kontinuierlich auszukleiden, mit einem Mittel zum Vortrieb des Rohres, dadurch gekennzeichnet, daß es aus einem tragbaren Rahmen (6, 7), der das vorgenannte Vortriebsmittel trägt, besteht, wobei das letztere ein aus einem mit Motor angetriebenen Fahrwerk (25) gebildetes Schubmittel ist, dessen Antriebsfläche aus Gummi ist, um das Kunststoffrohr (2) durch Reibung mitzunehmen und ihm eine kontinuierliche Bewegung innerhalb der Rohrleitung (1) zu verleihen, wobei das Fahrwerk sich um eine zu der Verschiebung des Kunststoffrohres etwa senkrechte Richtung herum dreht.

2. Gerät gemäß Anspruch 1, dadurch gekennzeichnet, daß das Fahrwerk mehrere. z.B. drei Räder mit Luftreifen (25) aufweist.

3. Gerät nach Anspruch 1 oder 2, dadurch gekennzeichnet, daß das Gerät ein aus einer Vielzahl von z.B. Diabolo-förmigen Rollen (14) besteht, so daß die beiden vorgenannten Farhrwerke das Rohr (2) jeweils beiderseits desselben in Längsrichtung einspannen.

4. Gerät gemäß Anspruch 3, dadurch gekennzeichnet, daß die Rollen (14) metallisch und lose an dem Rahmen angeordnet sind.

5. Gerät nach Anspruch 3 oder 4, dadurch gekennzeichnet, daß der Rahmen aus einem oberen Unterrahmen (6) und einem unteren Unterrahmen (7), die trennbar sind und jeweils einen der beiden vorgenannten Fahrwerke (25, 14) tragen, besteht.

6. Gerät gemäß Anspruch 5, dadurch gekennzeichnet, daß die beiden Unterrahmen (6,7) sich teleskopisch ineinanderstecken, um deren gegenseitigen Abstand in Abhängigkeit des Durchmessers des zu verlegenden Verrohrungsrohres einzustellen.

## Claims

1. Apparatus for tubing in a continuous manner the inside of a for example metal piping (1) with a pipe of plastics material (2) and comprising a means for driving the pipe, characterized in that it consists of a portable frame (6,7) which supports the aforesaid drive means, the latter being a thrust means consisting of a powered set of wheels (25) of which the driving surface is of rubber for driving the plastics pipe (2) through friction and imparting thereto a continuous movement inside of the piping (1), the set of wheels rotating about a direction substantially perpendicular to the displacement of the plastics piping.

2. Apparatus according to claim 1, characterized in that the set of wheels comprises several and for instance three wheels with pneumatic tyres (25).

3. Apparatus according to claim 1 or 2, characterized in that the apparatus comprises a second set of wheels consisting of a plurality of for example diabolo-shaped rollers (14), so that both aforesaid sets of wheels are longitudinally clamping the piping (2) on either side, respectively, of the latter.

4. Apparatus according to claim 3, characterized in that the rollers (14) are metallic and loosely mounted onto the frame.

5. Apparatus according to claim 3 or 4, characterized in that the frame consists of an upper sub-frame (6) and a lower sub-frame (7) separable and supporting each one one of the two aforesaid sets of wheels (25, 14).

6. Apparatus according to claim 5, characterized in that both sub-frames (6,7) fit telescopically into each other for adjusting their mutual spacing in accordance with the diameter of the tubing pipe to be laid.
